# EUROPÄISCHE PATENTSCHRIFT

(11) **EP 1 596 373 B1**
(45) Veröffentlichungstag und Bekanntmachung des Hinweises auf die Patenterteilung: **21.07.2010**
(21) Anmeldenummer: 05103726.5
(22) Anmeldetag: 04.05.2005
(51) Int. Cl.: G11B 5/64

(54) **Magnetisches Medium zur Speicherung von Informationen**
Magnetic medium for information storage
Moyen magnétique pour stockage d' informations

(30) Priorität: 10.05.2004 DE 102004024757
(43) Veröffentlichungstag der Anmeldung: 16.11.2005
(73) Patentinhaber: Leibniz-Institut für Festkörper- und Werkstoffforschung Dresden e.V., 01069 Dresden (DE)
(72) Erfinder: Fähler, Sebastian, 01099 Dresden (DE)
(74) Vertreter: Rauschenbach, Dieter

(56) Entgegenhaltungen:
- DD-A- 110 375
- U.K.RÖSSLER ET AL.: "Synthetic metamagnetism-magnetic switching of perpendicular antiferromagnetic superlattices" JOURNAL OF MAGNETISM AND MAGNETIC MATERIALS., Bd. 269, Nr. 3, März 2004 (2004-03), Seiten L287-L291, XP004484338 ELSEVIER SCIENCE PUBLISHERS, AMSTERDAM.

## Beschreibung

Die Erfindung betrifft ein magnetisches Medium zur Speicherung von Informationen, enthaltend mindestens zwei miteinander verbundene Materialien A und B.

Bei der magnetischen Datenspeicherung wird zur Erhöhung der Informationsdichte die Größe des einzelnen Bits immer weiter reduziert. Um bei der hiermit verbundenen Reduktion der Korngröße das superparamagnetische Limit zu vermeiden und eine thermisch stabile Magnetisierungsrichtung beizubehalten, werden hartmagnetische Materialien mit größerer magnetokristalliner Anisotropie verwendet. Hierdurch kann sich jedoch das Koerzitivfeld erhöhen, so das ein Schalten mit den üblichen Schreibköpfen, die typischerweise Magnetfelder bis maximal 2 T erzeugen können, nicht mehr möglich ist.

Um diese Materialien dennoch schalten zu können, wurde das thermisch assistierte magnetische Schreiben entwickelt. Hierbei wird das Speichermedium lokal aufgeheizt, so dass das dynamische Koerzitivfeld unter das Schreibfeld sinkt. Besonders erfolgversprechend sind hier austauschgekoppelte Schichten, die beispielsweise aus FePt/FeRh bestehen (J. Thiele, S. Maat, E. Fullerton, "FeRh/FePt antiferromagnet/ferromagnet exchange spring media for thermally assisted magnetic recording", Appl. Phys. Lett. 82(17) (2003) 2859). Das FePt speichert hierbei als hartmagnetisches Material die Magnetisierungsrichtung und das FeRh hat die sehr ungewöhnliche Eigenschaft, einen Phasenübergang erster Ordnung von der antiferromagnetischen Tieftemperaturphase zu einer ferromagnetischen Hochtemperaturphase aufzuweisen. Während die remanente Datenspeicherung unterhalb der Übergangstemperatur stattfindet, wird das Speichermedium für das Schreiben kurzfristig lokal über diese Temperatur aufgeheizt. Dieses Aufheizen wird in aufwändiger Weise mit einem zusätzlichen fein fokusierten Laserstrahl durchgeführt.

Der Erfindung liegt die Aufgabe zugrunde, ein magnetisches Medium zur Speicherung von Informationen zu schaffen, bei dem hochkoerzitive magnetische Medien mit den üblichen Schreibköpfen und ohne ein zusätzliches lokales Aufheizen beschrieben werden können.

Diese Aufgabe wird mit dem in den Patentansprüchen dargestellten magnetischen Speichermedium gelöst.

Das erfindungsgemäße Speichermedium enthält mindestens zwei miteinander verbundene Materialien A und B, wobei das Material A ein hartmagnetischer Werkstoff und das Material B ein Werkstoff ist, der ein metamagnetisches Verhalten in einem Magnetfeld aufweist. Das metamagnetische Verhalten des Materials B besteht darin, dass auch nach wiederholtem Durchlaufen eines äußeren Magnetfeldes von 0 bis 10 Tesla bei mindestens einer Magnetfeldstärke unter 3 Tesla eine Steigung der Magnetisierung in Abhängigkeit des Magnetfeldes eintritt, die überproportional ist und eine positive Krümmung aufweist.

Werkstoffe mit einem derartigen metamagnetischen Verhalten sind beispielsweise beschrieben in E. Stryjewski, N. Giordano, "Metamagnetism", Adv. Phys. **26**(5) (1977) 487.

Das erfindungsgemäße Speichermedium weist gegenüber den bekannten magnetischen Speichermedien einige wesentliche Vorteile auf. Besonders vorteilhaft ist, dass in dem erfindungsgemäß vorgesehen metamagnetischen Material über ein äußeres Magnetfeld die Magnetisierung derart beeinflusst werden kann, dass das Material in einem bestimmten Temperaturbereich von einem Zustand niedriger Magnetisierung (antiferromagnetisch oder paramagnetisch) zu einem Zustand hoher Magnetisierung (ferrimagnetisch oder ferromagnetisch) übergeht. Somit kann auf das aufwändige zusätzliche Aufheizen mit einem zusätzlichen Laserstrahl verzichtet und der ferromagnetische Zustand mit üblichen Schreibköpfen induziert werden. Nach dem Schreibvorgang geht die metamagnetische Schicht wieder in den Zustand niedriger Magnetisierung über, so dass die thermische Stabilität nicht wesentlich reduziert wird.

Das erfindunggsgemäße Speichermedium kann wie folgt variiert und vorteilhaft und/oder zweckmäßig ausgestaltet sein:

Das Material B weist einen durch ein Magnetfeld induzierten Phasenübergang erster oder zweiter Ordnung auf.

Das Material B weist im Temperaturbereich von 250 K bis 400 K mindestens einen Phasenübergang auf, der mit einer Änderung der magnetischen Ordnung verbunden ist und dessen Übergangstemperatur durch ein äußeres Magnetfeld um mindestens 1 K/Tesla veränderbar ist.

Das Material B besteht zu mindestens 20 at.% aus Elementen, die bei mindestens einer Temperatur im Temperaturbereich 1 K bis 350 K magnetische Ordnungen aufweisen.

Das Material B basiert auf Heuslerlegierungen, Manganaten oder Lanthanaten.

Das Material B basiert mit einer Variation der Zusammensetzung von bis zu 10 at.% auf der Phase YCo₂.

Das Material B basiert mit einer Variation der Zusammensetzung von bis zu 10 at.% auf der Phase Gd₅ (SiₓGe₁₋ₓ)₄ mit x>0,8.

Das Material B basiert mit einer Variation der Zusammensetzung von bis zu 10 at.% auf der Phase Hf₁₋ₓTaₓFe₂ mit x<0,2.

Das Material B basiert mit einer Variation der Zusammensetzung von bis zu 10 at.% auf der Phase Ni₂MnGa.

Das Material B enthält bis zu 30 at.% Zulegierungen von Elementen, die oberhalb 350 K keine ferri- oder ferromagnetische Ordnungen aufweisen.

Das Material B enthält bis zu 20 at.% Zulegierungen von Elementen, die bei mindestens einer Temperatur im Temperaturbereich von 1 K bis 350 K magnetische Ordnungen besitzen.

Das Material B enthält Zulegierungen aus der mit den Elementen Fe, Co, Ni, Cr, Mn gebildeten Gruppe oder aus der Elementegruppe der Seltenen Erden.

Das Material A ist im Temperaturbereich von mindestens 250 K bis 320 K ferri- oder ferromagnetisch und weist eine Anisotropiefeldstärke von mindestens 1,5 Tesla auf.

Das Material A enthält die Elemente Fe, Co, Ni oder Cr, wobei der Anteil dieser Elemente zusammen mindestens 20 at.% beträgt.

Das Material A ist als einlagige Schicht oder als Schichtverbund ausgebildet.

Das Material A basiert zu mindestens 90 at.% auf den Phasen FePt, CoPt, FePd, MnA1, CrPt₃, Co₃Pt, Sm₂CO₇, Sm₁Co₅, Sm₁Co₇, Sm₂Co₁₇, Sm₂Fe₁₇N₃ oder Nd₂Fe₁₄B.

Im Falle eines Schichtverbundes besteht das Material A aus Co/Pd, Co/Pt, Fe/Pt oder Fe/Pd, wobei der Schichtverbund eine Periodizität von weniger als 3 nm aufweist.

Das Material A enthält bis zu 30 at.% Zulegierungen von Elementen, die oberhalb 350 K keine ferro- oder ferrimagnetische Ordnungen aufweisen.

Das Material A enthält Zulegierungen aus der mit den Elementen Pt, Cr, Zr, Ta, O, B, C, P oder N gebildeten Gruppe.

Das Material A enthält bis zu 30 at.% Zulegierungen aus der mit den Elementen Fe, Co, Ni, Cr, Mn gebildeten Gruppe oder aus der Elementegruppe der Seltenen Erden.

Das Material A liegt als granulare Schicht vor, wobei diese Mikrostruktur sowohl während des Schichtwachstums als auch durch nachträgliche Strukturierungsmethoden entstanden ist.

Das Material A ist untexturiert oder weist eine Textur auf, bei der die magnetisch leichte Achse in Anwendungsrichtung ausgerichtet ist.

Die Materialien A und B liegen in Form von zusammenhängenden, einlagigen oder mehrlagigen Schichten vor oder sie liegen in Form von granularen, einlagigen oder mehrlagigen Schichten vor, in denen die Materialien A und B auch in der Schichtebene nebeneinander vorliegen.

Die Materialien A und B sind mittels Austauschkopplung miteinander gekoppelt.

Die Materialien A und B sind mittels magnetostatischer Wechselwirkung miteinander gekoppelt.

Zur Kopplung zwischen dem Material A und dem Material B sind ein oder mehrere zusätzliche Materialien vorhanden.

Die Materialien A und B sind mit weiteren, für magnetische Speichermedien üblichen Funktionsmaterialien, wie weichmagnetischen Grundschichten, Keimschichten und Korrosionsschutz-schichten, verbunden oder bedeckt.

Zwischen den Materialien A und B ist eine Keimschicht aus MgO angeordnet.

Die Materialien A und/oder B sind mit einer Schutzschicht aus diamantähnlichem Kohlenstoff bedeckt.

Nachstehend ist die Erfindung an Hand von Ausführungsbeispielen näher erläutert. In den zugehörigen Zeichnungen zeigen
- Fig. 1:: ein magnetisches Medium für Perpendicular Recording in schematischer Darstellungsweise,
- Fig. 2:: ein Diagramm mit Magnetisierungskurven,
- Fig. 3:: drei Abbildungen zum Schaltverhalten des magnetischen Mediums,
- Fig. 4:: ein magnetisches Medium mit einer zusätzlichen Keimschicht in schematischer Darstellungsweise,
- Fig. 5:: ein magnetisches Medium für longitudinal recording in schematischer Darstellungsweise,
- Fig. 6:: ein magnetisches Medium aufgebaut aus einem Schichtpaket in schematischer Darstellungsweise.

### Beispiel 1

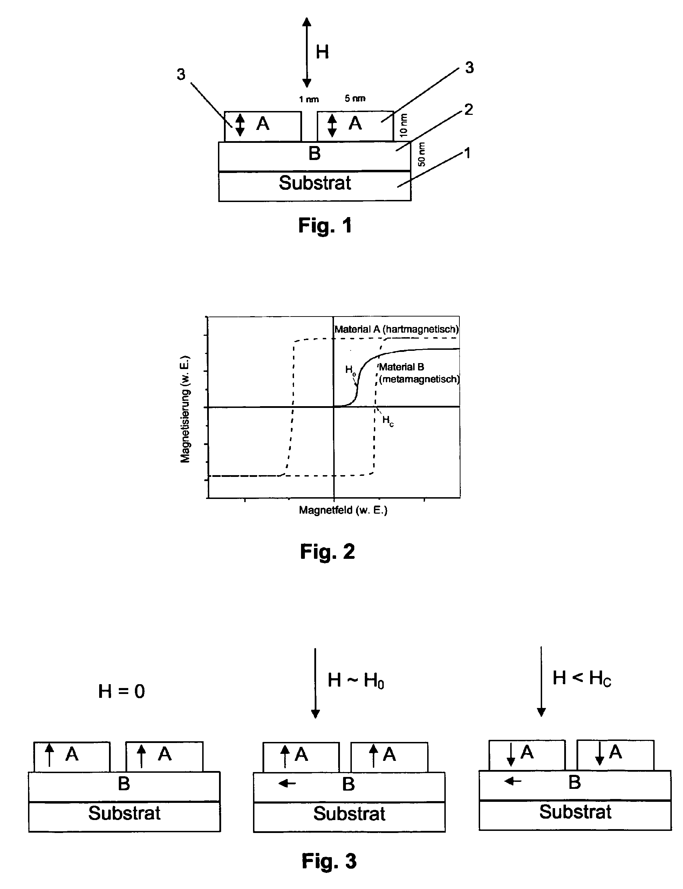

Bei dem in Fig. 1 dargestellten magnetischen Medium ist auf einem Substrat 1 aus Glas eine zusammenhängende, etwa 50 nm dicke metamagnetische Schicht 2 aus Hf_{0,7}Ta_{0,3}Fe₂ aufgebracht, die das Material B verkörpert. Das Material und seine Eigenschaften sind näher beschrieben in H. G. M. Duijn, E. Brück, A. A. Menovsky, K. H. J. Buschow, F. R. de Boer, R. Coehoorn, M. Winkelmann and K. Siemensmeyer, "Magnetic and transport properties of the itinerant electron system Hf₁₋ₓTaₓFe₂", J. Appl. Phys. **81**(8) (1997) 4218.

Auf der metamagnetischen Schicht 2 befindet sich eine etwa 10 nm dicke granulare Schicht 3, die ein hartmagnetisches Verhalten aufweist und das Material A verkörpert. Die granulare Schicht 3 ist für senkrechte Aufzeichnung texturiert, so dass die magnetisch leichte Achse (in der Fig. 1 symbolisiert durch die Doppelpfeile) senkrecht zum Substrat 1 ausgerichtet ist.

Die Körner der granularen Schicht 3 bestehen aus einer FePt-Basislegierung mit 50 at.% Fe und 50 at.% Pt. Besitzt die FePt Verbindung eine L1₀ geordnete Struktur, können sehr hohe Koerzitivfelder über 5 Tesla erreicht werden (M. Weisheit, L. Schultz, S. Fähler, "Textured growth of highly coercive L1₀ ordered FePt thin films on single crystalline and amorphous substrates", J. Appl. Phys. 95 (11) (2004) 7489). Zur Absenkung der Temperatur, die zur Ordnungseinstellung nötig ist, können dem vorliegenden Material A auch 5 at.% Cu und 2 at.% B zulegiert sein. Dies nichtmagnetische Elemente, die nicht mit FePt mischen, können zur magnetischen Entkopplung der Körner beitragen, wenn sie sich zwischen den hartmagnetischen Körnern befinden.

Lateral besitzen die Körner der granularen Schicht 3 eine Ausdehnung um 5 nm, und liegen damit knapp oberhalb des superparamagnetischen Limits. Die Körner sind durch einen schmalen, etwa 1 nm breiten Spalt voneinander magnetisch entkoppelt. Die Materialkombination FePt und Hf₁₋ₓTaₓFe₂ hat den Vorteil, das beide Materialien relativ stabil gegen Oxidation sind, so dass hier unter Umständen auf eine Schutzschicht verzichtet werden kann.

Die Speicherung von Informationen in dem in Fig. 1 dargestellten magnetischen Medium erfolgt mit einem in der Zeichnung nicht dargestellten Schreibkopf mit seinem Magnetfeld H, dessen Richtung durch den Doppelpfeil über der granularen Schicht 3 symbolisiert ist.

Fig. 2 zeigt die Magnetisierungskurven im Material A der granularen Schicht 3, die als texturierter Hartmagnet eine geöffnete Hysterese mit einem großem Koerzitivfeld H_{C} und hoher Remanenz aufweist. Eingetragen ist auch eine schematische Magnetisierungskurve des Materials B der Schicht 2, bei der die Magnetisierung überproportional zum Feld ansteigt. Typisch für einen Ordnungsübergang erster Ordnung ist ein Wendepunkt in der Magnetisierungskurve, der üblicherweise als Übergangsfeld H₀ genommen wird. Das Material B kann auch eine Hysterese aufweisen. Diese ändert jedoch nicht den qualitativen Verlauf im ersten Quadranten. Reicht das äußere Magnetfeld aus, um im Material B Domänenwände entstehen zu lassen, können diese beispielsweise über Austauschkopplung (E. F. Kneller, "The Exchange-Spring Magnet: A New Material Principle for Permanent Magnets", IEEE Trans. Mag. **27**(4) (1991) 3588) als Nukleationskeime im Material A wirken und so zum Schalten führen. Somit sollte die Kopplung von Material A und B das Schaltfeld des Schichtverbundes von H_{C} auf Felder um H₀ reduzieren. Das Übergangsfeld H₀ sollte oberhalb des Streufeldes von Material A liegen, welches durch die Sättigungsmagnetisierung begrenzt ist, so dass im remanenten Zustand keine nennenswerte Magnetisierung im Material B induziert wird.

Aus Fig. 3 ist das Schaltverhalten des magnetischen Mediums ersichtlich. Die Pfeile illustrieren die Magnetisierungsrichtung. In der linken Abbildung ist der remanente Zustand ohne äußeres Magnetfeld dargestellt, bei dem nur das hartmagnetische Material A eine remanente Magnetisierung aufweist, die den thermischen Fluktuationen widerstehen kann. In der mittleren Abbildung wird ein äußeres Magnetfeld in der Größenordnung des Übergangsfeldes H₀ zum Schreiben angelegt. Hierdurch wird in dem metamagnetischen Material B ein magnetisches Moment induziert. In der rechten Abbildung ist der geschaltete Zustand dargestellt, der im Schichtverbund schon bei Feldern deutlich unterhalb von H_{C} einer Einzelschicht von Material A stattgefunden hat.

### Beispiel 2

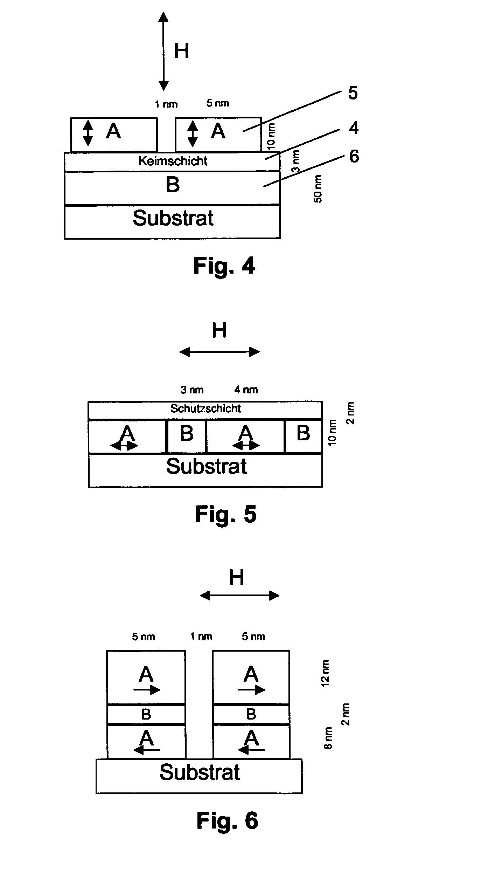

In Fig. 4 ist ein zum Beispiel 1 alternativer Aufbau eines Speichermediums dargestellt, bei dem eine zusätzliche Keimschicht 4 zwischen einer Schicht 5 aus einem hartmagnetischen Material A und einer Schicht 6 aus einem metamagnetischen Material B vorhanden ist. Die Schicht 5 besteht aus einer FePt-Basislegierung und die Schicht 6 aus Hf_{0,7}Ta_{0,3}Fe₂.

Die Keimschicht 4 ist 3 nm dick und besteht aus MgO. Sie dient zur Bildung einer (001)-Textur in der FePt-Schicht 5. Die Keimschicht 4 führt außerdem zu einem granularen Wachstum isolierter Körner, da vom FePt das MgO nicht benetzt wird. Die Kopplung zwischen den Materialien A und B findet durch magnetostatische Wechselwirkung statt.

Als Speichermedium können auch die anderen Materialkombinationen A und B verwendet werden, die erfindungsgemäß vorgesehen sind. So kann das Material A selbst aus Schichtpaketen aufgebaut sein. Das Material A kann auch beispielsweise aus der wiederholten Abfolge einer Monolage Co und zwei Monolagen Pd bestehen. Eine solche Abfolge ist beschrieben von G. H. O. Daalderop, P. J. Kelly, and M. F. H. Schuurmans, "First-principles calculation of the magnetic anisotropy energy of (Co)ₙ/(X)ₘ multilayers", Phys. Rev. B 42(1990) 7270. Die Verwendung einer trennenden Keimschicht erlaubt auch die Verwendung von Ni₂MnGa als Material B, das relativ reaktiv ist.

### Beispiel 3

Erfindungsgemäß besonders geeignet sind Materialkombinationen, die viele Legierungselemente gemeinsam haben. Dem entsprechend besteht bei diesem Beispiel, das sich auf die in Fig. 5 gezeigte Anordnung bezieht, das hartmagnetische Material A aus SmCo₅ und das metamagnetische Material B aus YCo₂. Dabei sind beim SmCo₅ durch das sehr hohe Anisotropiefeld von 35 T Körner mit Abmessungen unter 4 nm möglich, die dem superparamagnetischen Limit wiederstehen können. Um die Magnetisierung dennoch schalten zu können, werden als metamagnetisches Material von YCo₂ abgeleitete Verbindungen (H. Yamada, "Metamagnetic Transition and Susceptibility Maximum in an Itinerant-Electron System", Phys. Rev. B **47**(17) (1993) 11211) verwendet, deren Übergangsfeld H₀ durch die Zulegierung von wenigen Prozent Al drastisch reduziert werden kann.

Die Textur der SmCo₅ Schicht ist so ausgebildet, dass die leichte magnetische c-Achse in der Filmebene liegt. Dieses ist die von diesem Material bevorzugten Wachstumsrichtung, so dass die longitudinale Schreibgeometrie anwendbar ist.

Das Substrat kann eine sauerstofffreie, hochfeste Aluminiumlegierungen sein.

Zum Schutz vor Korrosion sind die Schichten mit einer Schutzschicht versehen, die hier aus einer 2 nm dicken diamantähnlichen Kohlenstoffschicht besteht.

Das metamagnetische Material B befindet sich bei diesem Beispiel in einem 3 nm breiten Bereich zwischen den hartmagnetischen Körnern A. Ohne äußeres Magnetfeld sind die Körner somit magnetisch voneinander entkoppelt, bei dem Anlegen eines äußeren Magnetfeldes findet eine teilweise Kopplung statt.

### Beispiel 4

Das in Fig. 6 dargestellte, longitudinale Speichermedium ist mit antiferromagnetisch gekoppelten Schichtpaketen aufgebaut. Mit Schichtpaketen wird bekanntlich eine bessere thermische Stabilität ohne Erhöhung des Koerzitivfeldes erreicht (J. Lohau, A. Moser, D. T. Margulies, E. E. Fullerton, M. E. Schabes, "Dynamic coercivity measurements of antiferromagnetically coupled magnetic media layers", Appl. Phys. Lett. **78**(18) (2001) 2748). Die Information wird hier durch das Streufeld der dickeren, oberen Schicht A ausgelesen.

Die Zwischenschicht B ist bei diesem Speichermedium nicht wie üblich paramagnetisch, sondern weist vielmehr erfindungsgemäß ein metamagnetisches Verhalten auf. Durch ein äußeres Magnetfeld wird beim Schreiben in dem Material B eine Magnetisierung induziert, so dass nicht mehr die antiferromagnetische Kopplung der beiden hartmagnetischen Schichten begünstigt ist, sondern eine parallele Ausrichtung der Magnetisierung. Somit entsteht ein instabiler Zwischenzustand, der es für ein äußeres Magnetfeld leichter macht, die Magnetisierungsrichtung zu ändern. Das Schreibfeld wird somit weiter reduziert.

## Patentansprüche

1. Magnetisches Medium zur Speicherung von Informationen, enthaltend mindestens zwei miteinander verbundene Materialien A und B, wobei das Material A ein hartmagnetischer Werkstoff ist, **dadurch gekennzeichnet, dass** das Material B ein Werkstoff ist, der ein metamagnetisches Verhalten in einem Magnetfeld aufweist, wobei das metamagnetisches Verhalten des Werkstoffs darin besteht, dass auch nach wiederholtem Durchlaufen eines äußeren Magnetfeldes von 0 bis 10 Tesla bei mindestens einer Magnetfeldstärke unter 3 Tesla eine Steigung der Magnetisierung in Abhängigkeit des Magnetfeldes eintritt, die überproportional ist und eine positive Krümmung aufweist.

2. Magnetisches Medium nach Anspruch 1, **dadurch gekennzeichnet, dass** das Material B einen durch ein Magnetfeld induzierten Phasenübergang erster oder zweiter Ordnung aufweist.

3. Magnetisches Medium nach Anspruch 1, **dadurch gekennzeichnet, dass** das Material B im Temperaturbereich von 250 K bis 400 K mindestens einen Phasenübergang aufweist, der mit einer Änderung der magnetischen Ordnung verbunden ist und dessen Übergangstemperatur durch ein äußeres Magnetfeld um mindestens 1 K/Tesla veränderbar ist.

4. Magnetisches Medium nach Anspruch 1, **dadurch gekennzeichnet, dass** das Material B zu mindestens 20 at.% aus Elementen besteht, die bei mindestens einer Temperatur im Temperaturbereich 1 K bis 350 K magnetische Ordnungen aufweist.

5. Magnetisches Medium nach Anspruch 1, **dadurch gekennzeichnet, dass** das Material B auf Heuslerlegierungen, Manganaten oder Lanthanaten basiert.

6. Magnetisches Medium nach Anspruch 1, **dadurch gekennzeichnet, dass** das Material B mit einer Variation der Zusammensetzung von bis zu 10 at.% auf der Phase YCo₂ basiert.

7. Magnetisches Medium nach Anspruch 1, **dadurch gekennzeichnet, dass** das Material B mit einer Variation der Zusammensetzung von bis zu 10 at.% auf der Phase Gd₅(SiₓGe₁₋ₓ)₄ mit x>0,8 basiert.

8. Magnetisches Medium nach Anspruch 1, **dadurch gekennzeichnet, dass** das Material B mit einer Variation der Zusammensetzung von bis zu 10 at.% auf der Phase Hf₁₋ₓTaₓFe₂ mit x<0,2 basiert.

9. Magnetisches Medium nach Anspruch 1, **dadurch gekennzeichnet, dass** das Material B mit einer Variation der Zusammensetzung von bis zu 10 at.% auf der Phase Ni₂MnGa basiert.

10. Magnetisches Medium nach Anspruch 1, **dadurch gekennzeichnet, dass** das Material B bis zu 30 at.% Zulegierungen von Elementen enthält, die oberhalb 350 K keine ferri- oder ferromagnetische Ordnungen aufweisen.

11. Magnetisches Medium nach Anspruch 1, **dadurch gekennzeichnet, dass** das Material B bis zu 20 at.% Zulegierungen von Elementen aufweist, die bei mindestens einer Temperatur im Temperaturbereich von 1 K bis 350 K magnetische Ordnungen besitzen.

12. Magnetisches Medium nach Anspruch 11, **dadurch gekennzeichnet, dass** das Material B Zulegierungen aus der mit den Elementen Fe, Co, Ni, Cr, Mn gebildeten Gruppe oder aus der Elementegruppe der Seltenen Erden enthält.

13. Magnetisches Medium nach Anspruch 1, **dadurch gekennzeichnet, dass** Material A im Temperaturbereich von mindestens 250 K bis 320 K ferri- oder ferromagnetisch ist und eine Anisotropiefeldstärke von mindestens 1,5 Tesla aufweist.

14. Magnetisches Medium nach Anspruch 1, **dadurch gekennzeichnet, dass** das Material A die Elemente Fe, Co, Ni oder Cr enthält, wobei der Anteil dieser Elemente zusammen mindestens 20 at.% beträgt.

15. Magnetisches Medium nach Anspruch 1, **dadurch gekennzeichnet, dass** das Material A als einlagige Schicht oder als Schichtverbund ausgebildet ist.

16. Magnetisches Medium nach Anspruch 15, **dadurch gekennzeichnet, dass** das Material A zu mindestens 90 at.% auf den Phasen FePt, CoPt, FePd, MnAl, CrPt₃, Co₃Pt, Sm₂Co₇, Sm₁Co₅, Sm₁Co₇, Sm₂Co₁₇, Sm₂Fe₁₇N₃ oder Nd₂Fe₁₄B basiert.

17. Magnetisches Medium nach Anspruch 15, **dadurch gekennzeichnet, dass** der Schichtverbund des Materials A aus Co/Pd, Co/Pt, Fe/Pt oder Fe/Pd besteht, wobei der Schichtverbund eine Periodizität von weniger als 3 nm aufweist.

18. Magnetisches Medium nach Anspruch 1, **dadurch gekennzeichnet, dass** das Material A bis zu 30 at.% Zulegierungen von Elementen enthält, die oberhalb 350 K keine ferro- oder ferrimagnetische Ordnungen aufweisen.

19. Magnetisches Medium nach Anspruch 18, **dadurch gekennzeichnet, dass** das Material A Zulegierungen aus der mit den Elementen Pt, Cr, Zr, Ta, O, B, C, P oder N gebildeten Gruppe enthält.

20. Magnetisches Medium nach Anspruch 1, **dadurch gekennzeichnet, dass** das Material A bis zu 30 at.% Zulegierungen aus der mit den Elementen Fe, Co, Ni, Cr, Mn gebildeten Gruppe oder aus der Elementegruppe der Seltenen Erden enthält.

21. Magnetisches Medium nach Anspruch 1, **dadurch gekennzeichnet, dass** das Material A als granulare Schicht vorliegt, wobei diese Mikrostruktur sowohl während des Schichtwachstums als auch durch nachträgliche Strukturierungsmethoden entstanden ist.

22. Magnetisches Medium nach Anspruch 1, **dadurch gekennzeichnet, dass** das Material A untexturiert ist.

23. Magnetisches Medium nach Anspruch 1, **dadurch gekennzeichnet, dass** das Material A eine Textur aufweist, bei der die magnetisch leichte Achse in Anwendungsrichtung ausgerichtet ist.

24. Magnetisches Medium nach Anspruch 1, **dadurch gekennzeichnet, dass** die Materialien A und B in Form von zusammenhängenden, einlagigen oder mehrlagigen Schichten vorliegen.

25. Magnetisches Medium nach Anspruch 1, **dadurch gekennzeichnet, dass** die Materialien A und B in Form von granularen, einlagigen oder mehrlagigen Schichten vorliegen, in denen die Materialien A und B auch in der Schichtebene nebeneinander vorliegen.

26. Magnetisches Medium nach Anspruch 1, **dadurch gekennzeichnet, dass** die Materialien A und B mittels Austauschkopplung miteinander gekoppelt sind.

27. Magnetisches Medium nach Anspruch 1, **dadurch gekennzeichnet, dass** die Materialien A und B mittels magnetostatischer Wechselwirkung miteinander gekoppelt sind.

28. Magnetisches Medium nach Anspruch 1, **dadurch gekennzeichnet, dass** zur Kopplung zwischen dem Material A und dem Material B ein oder mehrere zusätzliche Materialien vorhanden sind.

29. Magnetisches Medium nach Anspruch 1, **dadurch gekennzeichnet, dass** die Materialien A und B mit weiteren, für magnetische Speichermedien üblichen Funktionsmaterialien, wie weichmagnetischen Grundschichten, Keimschichten und Korrosionsschutzschichten, verbunden oder bedeckt sind.

## Claims

1. Magnetic medium for the storage of information, comprising at least two materials A and B which are joined together, wherein the material A is a hard magnetic material, **characterized in that** the material B is a material having a metamagnetic behaviour in a magnetic field, wherein the metamagnetic behaviour of the material consists in the fact that, even after repeatedly passing through an external magnetic field of 0 to 10 Tesla with at least a magnetic field strength of less than 3 Tesla, an increase in the magnetization which is superproportional and has a positive curve occurs, depending on the magnetic field.

2. Magnetic medium according to Claim 1, **characterized in that** the material B has a first-order or second-order phase transition induced by a magnetic field.

3. Magnetic medium according to Claim 1, **characterized in that** the material B has at least one phase transition in the temperature range of 250 K to 400 K, this phase transition is associated with a change in the magnetic order and the transition temperature thereof can be varied by at least 1 K/Tesla by an external magnetic field.

4. Magnetic medium according to Claim 1, **characterized in that** the material B consists to an extent of at least 20 at.% of elements which have magnetic orders at at least a temperature in the temperature range of 1 K to 350 K.

5. Magnetic medium according to Claim 1, **characterized in that** the material B is based on Heusler alloys, manganates or lanthanates.

6. Magnetic medium according to Claim 1, **characterized in that** the material B, with a variation of the composition of up to 10 at.%, is based on the phase YCo₂.

7. Magnetic medium according to Claim 1, **characterized in that** the material B, with a variation of the composition of up to 10 at.%, is based on the phase Gd5 (SiₓGe₁₋ₓ) ₄, where x > 0.8.

8. Magnetic medium according to Claim 1, **characterized in that** the material B, with a variation of the composition of up to 10 at.%, is based on the phase Hf₁₋ₓTaₓFe₂, where x < 0.2.

9. Magnetic medium according to Claim 1, **characterized in that** the material B, with a variation of the composition of up to 10 at.%, is based on the phase Ni₂MnGa.

10. Magnetic medium according to Claim 1, **characterized in that** the material B contains up to 30 at.% of alloy additives of elements which do not have ferrimagnetic or ferromagnetic orders above 350 K.

11. Magnetic medium according to Claim 1, **characterized in that** the material B contains up to 20 at.% of alloy additives of elements which have magnetic orders at at least a temperature in the temperature range of 1 K to 350 K.

12. Magnetic medium according to Claim 11, **characterized in that** the material B contains alloy additives from the group formed by the elements Fe, Co, Ni, Cr and Mn or from the group formed by the rare earth elements.

13. Magnetic medium according to Claim 1, **characterized in that** the material A is ferrimagnetic or ferromagnetic in the temperature range of at least 250 K to 320 K, and has an anisotropic field strength of at least 1.5 Tesla.

14. Magnetic medium according to Claim 1, **characterized in that** the material A contains the elements Fe, Co, Ni or Cr, where the proportion of these elements together amounts to at least 20 at.%.

15. Magnetic medium according to Claim 1, **characterized in that** the material A is in the form of a single-ply layer or a layer composite.

16. Magnetic medium according to Claim 15, **characterized in that** the material A is based to an extent of at least 90 at.% on the phases FePt, CoPt, FePd, MnAl, CrPt₃, Co₃Pt, Sm₂Co₇, Sm₁Co₅, Sm₁Co₇, Sm₂Co₁₇, Sm₂Fe₁₇N₃ or Nd₂Fe₁₄B.

17. Magnetic medium according to Claim 15, **characterized in that** the layer composite of the material A consists of Co/Pd, Co/Pt, Fe/Pt or Fe/Pd, wherein the layer composite has a periodicity of less than 3 nm.

18. Magnetic medium according to Claim 1, **characterized in that** the material A contains up to 30 at.% of alloy additives of elements which do not have ferromagnetic or ferrimagnetic orders above 350 K.

19. Magnetic medium according to Claim 18, **characterized in that** the material A contains alloy additives from the group formed by the elements Pt, Cr, Zr, Ta, O, B, C, P or N.

20. Magnetic medium according to Claim 1, **characterized in that** the material A contains up to 30 at.% of alloy additives from the group formed by the elements Fe, Co, Ni, Cr and Mn or from the group formed by the rare earth elements.

21. Magnetic medium according to Claim 1, **characterized in that** the material A is present in the form of a granular layer, wherein this microstructure is produced both during the layer growth and by subsequent structuring methods.

22. Magnetic medium according to Claim 1, **characterized in that** the material A is untextured.

23. Magnetic medium according to Claim 1, **characterized in that** the material A has a texture in which the magnetic easy axis is oriented in the direction of application.

24. Magnetic medium according to Claim 1, **characterized in that** the materials A and B are present in the form of contiguous, single-ply or multi-ply layers.

25. Magnetic medium according to Claim 1, **characterized in that** the materials A and B are present in the form of granular, single-ply or multi-ply layers, in which the materials A and B are also present alongside each other in the plane of the layer.

26. Magnetic medium according to Claim 1, **characterized in that** the materials A and B are coupled to each other by means of exchange coupling.

27. Magnetic medium according to Claim 1, **characterized in that** the materials A and B are coupled to each other by means of magnetostatic interaction.

28. Magnetic medium according to Claim 1, **characterized in that** one or more additional materials are present for coupling between the material A and the material B.

29. Magnetic medium according to Claim 1, **characterized in that** the materials A and B are connected to or covered with further functional materials customary for magnetic storage media, such as soft-magnetic base layers, seed layers and anti-corrosion layers.

## Revendications

1. Support magnétique pour le stockage d'informations, contenant au moins deux matériaux A et B mutuellement reliés, le matériau A étant un matériau magnétique dur,
**caractérisé en ce que**
le matériau B est un matériau qui présente un comportement métamagnétique dans un champ magnétique,
le comportement métamagnétique du matériau résidant **en ce que** même après avoir traversé de manière répétée un champ magnétique extérieur de 0 à 10 Tesla, il présente à une intensité du champ magnétique inférieur à 3 Tesla une augmentation de la magnétisation en fonction du champ magnétique qui est plus que proportionnelle et qui présente une courbure positive.

2. Support magnétique selon la revendication 1, **caractérisé en ce qu'**un champ magnétique induit dans le matériau B une transition de phase du premier ou du deuxième ordre.

3. Support magnétique selon la revendication 1, **caractérisé en ce que** dans la plage de température de 250 K à 400 K, le matériau B présente au moins une transition de phase associée à une modification de l'ordonnancement magnétique et dont la température de transition vitreuse peut être modifiée d'au moins 1 K/Tesla par un champ magnétique extérieur.

4. Support magnétique selon la revendication 1, **caractérisé en ce que** le matériau B est constitué au moins à 20 % atomiques d'éléments qui présentent des ordonnancements magnétiques à au moins une température comprise dans la plage de 1 K à 350 K.

5. Support magnétique selon la revendication 1, **caractérisé en ce que** le matériau B est à base d'alliages de Heusler, de manganates ou de manthanates.

6. Support magnétique selon la revendication 1, **caractérisé en ce que** le matériau B est à base de la phase YCo₂ avec une variation de la composition de jusque 10 % atomiques.

7. Support magnétique selon la revendication 1, **caractérisé en ce que** le matériau B est à base de la phase Gd₅(SiₓGe₁₋ₓ)₄, x > 0,8, avec une variation de la composition de jusque 10 % atomiques.

8. Support magnétique selon la revendication 1, **caractérisé en ce que** le matériau B est à base de la phase Hf₁₋ₓTaₓFe₂, x < 0,2, avec une variation de la composition de jusque 10 % atomiques.

9. Support magnétique selon la revendication 1, **caractérisé en ce que** le matériau B est à base de la phase Ni₂MnGa avec une variation de la composition de jusque 10 % atomiques.

10. Support magnétique selon la revendication 1, **caractérisé en ce que** le matériau B contient jusque 30 % atomiques d'éléments d'alliage qui ne présentent pas d'ordonnancements ferrimagnétiques ou ferromagnétiques au-dessus de 350 K.

11. Support magnétique selon la revendication 1, **caractérisé en ce que** le matériau B présente jusque 20 % atomiques d'éléments d'alliage qui possèdent des ordonnancements magnétiques à au moins une température comprise dans la plage de 1 K à 350 K.

12. Support magnétique selon la revendication 11, **caractérisé en ce que** le matériau B contient des éléments d'alliage de l'ensemble formé des éléments Fe, Co, Ni, Cr et Mn ou du groupe des éléments des terres rares.

13. Support magnétique selon la revendication 1, **caractérisé en ce que** dans la plage de température d'au moins 250 K à 320 K, le matériau A est ferrimagnétique ou ferromagnétique et présente une intensité du champ d'anisotropie d'au moins 1,5 Tesla.

14. Support magnétique selon la revendication 1, **caractérisé en ce que** le matériau A contient les éléments Fe, Co, Ni ou Cr, la teneur conjointe en ces éléments étant d'au moins 20 % atomiques.

15. Support magnétique selon la revendication 1, **caractérisé en ce que** le matériau A est configuré sous la forme d'une monocouche ou d'un ensemble de couches.

16. Support magnétique selon la revendication 15, **caractérisé en ce que** pour au moins 90 % atomiques, le matériau A est à base des phases FePt, CoPt, FePd, MnAl, CrPt₃, Co₃Pt, Sm₂Co₇, Sm₁Co₅, Sm₁Co₇, Sm₂Co₁₇, Sm₂Fe₁₇N₃ ou Nd₂Fe₁₄B.

17. Support magnétique selon la revendication 15, **caractérisé en ce que** l'ensemble de couches du matériau A est constitué de Co/Pd, Co/Pt, Fe/Pt ou Fe/Pd, l'ensemble de couches présentant une périodicité de moins de 3 nm.

18. Support magnétique selon la revendication 1, **caractérisé en ce que** le matériau A contient jusque 30 % atomiques d'éléments d'alliage qui ne présentent pas d'ordonnancements ferromagnétiques ou ferrimagnétiques au-dessus de 350 K.

19. Support magnétique selon la revendication 18, **caractérisé en ce que** le matériau A contient des éléments d'alliage de l'ensemble formé des éléments Pt, Cr, Zr, Ta, O, B, C, P ou N.

20. Support magnétique selon la revendication 1, **caractérisé en ce que** le matériau A contient jusque 30 % atomiques d'éléments d'alliage de l'ensemble formé des éléments Fe, Co, Ni, Cr et Mn ou de l'ensemble formé des éléments des terres rares.

21. Support magnétique selon la revendication 1, **caractérisé en ce que** le matériau A présente la forme d'une couche granulaire, cette microstructure étant présente à la fois pendant la croissance de la couche et pendant les opérations ultérieures de structuration.

22. Support magnétique selon la revendication 1, **caractérisé en ce que** le matériau A n'est pas texturé.

23. Support magnétique selon la revendication 1, **caractérisé en ce que** le matériau A présente une structure dans laquelle l'axe de magnétisation aisée est orienté dans la direction d'application.

24. Support magnétique selon la revendication 1, **caractérisé en ce que** les matériaux A et B présentent la forme de couches reliées, simples ou multiples.

25. Support magnétique selon la revendication 1, **caractérisé en ce que** les matériaux A et B présentent la forme de couches granulaires simples ou multiples dans lesquelles les matériaux A et B sont situés les uns à côté des autres dans le plan de la couche.

26. Support magnétique selon la revendication 1, **caractérisé en ce que** les matériaux A et B sont couplés mutuellement par couplage d'échange.

27. Support magnétique selon la revendication 1, **caractérisé en ce que** les matériaux A et B sont couplés mutuellement par interactions magnétostatiques.

28. Support magnétique selon la revendication 1, **caractérisé en ce que** pour le couplage du matériau A au matériau B, un ou plusieurs matériaux supplémentaires sont prévus.

29. Support magnétique selon la revendication 1, **caractérisé en ce que** les matériaux A et B sont reliés à d'autres matériaux fonctionnels habituels des supports magnétiques de mémoire, par exemple des couches de base magnétiques douces, des couches de germination ou des couches de protection contre la corrosion, ou en sont recouverts.
